# FASCICULE DE BREVET EUROPEEN

(11) **EP 0 624 056 B1**
(45) Date de publication et mention de la délivrance du brevet: **05.06.1996**
(21) Numéro de dépôt: 93914528.0
(22) Date de dépôt: 27.01.1993
(51) Int. Cl.: A01B 71/06, F16D 1/10, B60K 17/28, F16P 3/12

(54) **DISPOSITIF DE SECURITE DE PRISE DE FORCE SUR TRACTEUR AGRICOLE OU SUR UNE AUTRE MACHINE AVEC ARBRE TOURNANT**
SICHERHEITSVORRICHTUNG FÜR ZAPFWELLE EINES TRAKTORS ODER EINER ÄHNLICHEN MASCHINE MIT ROTIERENDER WELLE
POWER TAKE-OFF SAFETY DEVICE FOR AGRICULTURAL TRACTORS OR OTHER MACHINES HAVING ROTARY SHAFTS

(30) Priorité: 31.01.1992 BE 9200099
(43) Date de publication de la demande: 17.11.1994
(73) Titulaire: CORNETTE, Maurice, B-5600 Romedenne-Phillippeville (BE)
(72) Inventeur: CORNETTE, Maurice, B-5600 Romedenne-Phillippeville (BE)
(74) Mandataire: Leherte, Georges Dr.
(86) Numéro de dépôt international: EP9300172
(87) Numéro de publication internationale: WO9314620

(56) Documents cités:
- EP-A- 0 016 588
- EP-A- 0 291 793
- EP-A- 0 334 704
- WO-A-82/02993
- WO-A-84/03349
- FR-A- 771 868
- FR-A- 2 365 722
- FR-A- 2 443 190

## Description

Les prises de force, malgré la protection existante d'origine, font chaque année de nombreux accidents mortes ou graves (bras arrachés, corps mutilés). Par le présent système de sécurité, nous prétendons diminuer sensiblement le nombre d'accidents dans les domai nes agricoles, horticoles ou industriels où l'on utilise fréquemment des machines munies d'un arbre tournant.

La demande de brevet FR-A-2 365 722 (Jean Walterscheid G.m.b.H.) décrit un accouplement séparable rapide pour réunir deux arbres. Le dispositif d'accouplement est construit pour faciliter le changement d'outils qui sont actionnés par une prise de force montée sur un tracteur. Le désaccouplement et l'accouplement est fait manuellement pendant l'arrêt de la prise de force. Le dispositif est utilisé en manoeuvrant une poignée ou pédale en deux phases de mouvement successives dans une même direction.

Lors de l'utilisation de la machine, lorsqu'on approche trop près, actuellement, il arrive souvent que le vêtement (manche) soit pris et entraîné par l'arbre tournant, dans un mouvement de rotation si rapide, qu'il ne permet pas à l'utilisateur de la machine de réagir. Il voit ainsi souvent son bras entraîné par la prise de force et tout le corps suit le mouvement, causant de graves préjudices entraînant souvent la mort de l'utilisateur.

La demande de brevet EP-A-0 016 588 (G. LAW) décrit un appareil pour prévenir des accidents. Une antenne détecte un contact humain et son mouvement provoque, par l'intermédiaire de circuits électriques et de leviers mécaniques, l'arrêt d'un moteur à combustion d'un tracteur agricole comportant une prise de force. Le dispositif décrit dans la demande de brevet EP-A-0 016 588 provoque alors la mise hors service de la prise de force selon les trois étapes suivantes: touche de l'antenne, détection du mouvement de l'antenne, arrêt du moteur du tracteur et par la suite de la prise de force sans découplage de celle-ci et de la machine entraînée.

Grâce à notre système nouveau de sécurité, lorsqu'on approche trop près du cardan et qu'on touche un palpeur, la sécurité se décroche de la prise de force et le cardan arrête de suite sa rotation. Le palpeur, qui peut être une corde ou une cellule, doit avoir un rayon d'action allant de l'arrière du tracteur ou de la machine motrice, jusqu'au bout de la machine à entraîner.

La demande de brevet EP-A-0 291 793 décrit un appareil comportant les caractéristiques du préambule de la revendication 1.

L'accouplement de sécurité pour prise de force pour transmettre le mouvement de la prise de force à la machine entraînée est caractérisé par:
- un élément solidaire (F,H) de l'axe de sortie (M) de l'accouplement de sécurité,
- un élément intermédiaire (E) agencé de manière à s'engager sur l'élément précédent (F,H) et à assurer verrouillage et déverrouillage de la prise de force d'une part et l'élément solidaire (F,H) de l'axe de sortie (M) d'autre part de façon à transmettre ou à interrompre le mouvement de la prise de force à l'axe de sortie (M),
- un organe de commande (A,B) de désaccouplement agencé pour bloquer l'élément intermédiaire (E) pour déverrouiller le montage et interrompre l'entraînement.

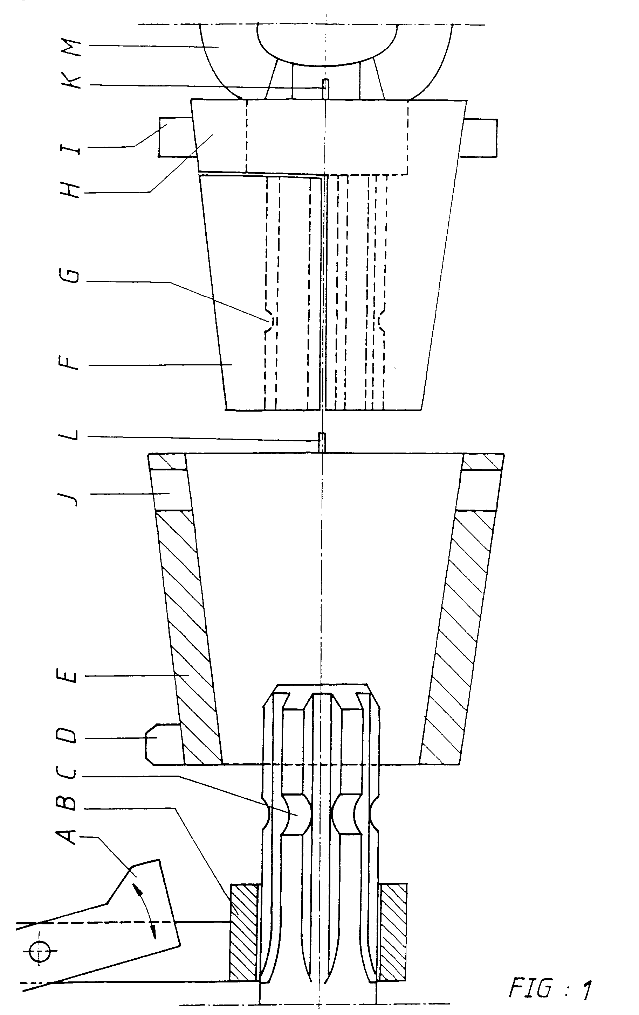

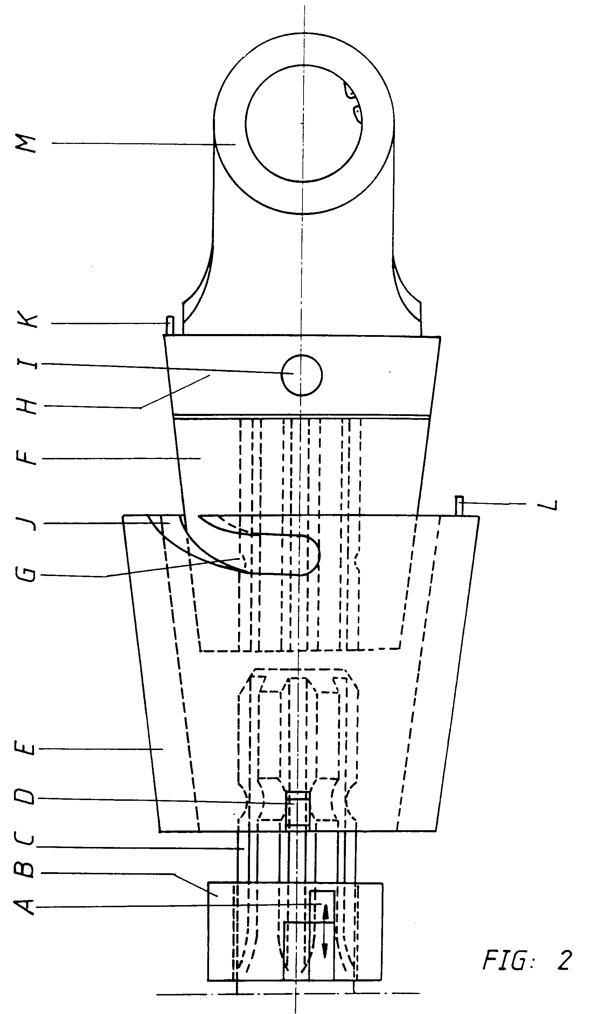

Afin de clarifier la vision du mécanisme, on a représenté le système de sécurité démonté sur la Figure 1. Cette figure explique les différentes composantes de la sécurité. Une bague B coulisse sur la prise de force; cette bague supporte un balancier A dont la position dessinée sur la Fig. 1 est celle qu'il a lorsqu'il est en sécurité. Par après, le balancier revient à sa position neutre par son propre poids ou grâce à un ressort qui n'est pas représenté ici sur la Figure 1.
M est l'axe de sortie du dispositif de sécurité.
Dans la coupe du cyclindre conique E sont dessinées les deux glissières J ainsi qu'un fer plat D.
Dans le cylindre conique vient s' engager une pièce conique et cylindrique faite de deux parties principales F et H. L'ergot G doit s'encastrer au montage dans la gorge C de la prise de force. Les deux ronds I (Fig. 1 et 2) doivent venir se loger danses glissières J du cylindre conique E.

La Fig. 2. représente la vue de dessus de la sécurité et de son montage. En effet, lorsqu'on pousse la prise de force à l'intérieur de la pièce conique F - H, l'ergot G vient se bloquer dans la gorge C de la prise de force. L'ensemble pousse la bague B munie du balancier A qui prend ainsi sa bonne place, le cylindre E avançant en même temps. Après avoir logé les ronds I dans les glissières J du cyclindre conique E, on fait faire un quart de tour à E qui vient ainsi serrer le cône F.-H. sur la prise de force C. L'ergot G empêche la sécurité de s' enlever de la prise de force.

Un ressort (qui n'est pas représenté sur les Figures afin de ne pas compliquer le dessin et faciliter la compréhension de celui-ci) se place entre la broche L du cylindre E et la broche K du cône F - H de façon que les ronds I s'enfoncent bien au bout des glissière J.

Par son poids ou par un ressort, le balacier A revient dans sa position de départ et le cardan est prêt à fonctionner en toute sécurité.

Quand le cardan tourne et qu'un homme ou un objet approche trop près, touche le palpeur ou interrompt le rayon électronique, le balancier A est actionné (se balance) et vient bloquer l'arrêt D du cylindre E. De ce fait, le cylindre E s' arrête et ne tourne plus avec l'ensemble F - H. Les ronds I de F - H continuent à tourner et ainsi se dévissent des glissières J: de cette façon, la pièce conique F - H et le cylindre E ne se serrent plus sur la prise de force et se séparent de celle-ci en se divisant en trois morceaux: E - F - H. Le ressort recule avec la pièce H et glisse hors de la pièce L du cylindre E. Du fait que le cardan et la sécurité sont complètement enlevés de la prise de force, ils s' arrêtent immédiatement de tourner.
Il est clair qu'il faut peu de temps pour remettre la sécurité en place et continuer le travail dans de bonnes conditions.
Dans ce système de sécurité, l'axe de sortie (M) de l'accouplement de sécurité peut être soit en forme de bout d'arbre cannelé comme la prise de force (C) soit en forme de cardan (croisillon).

## Revendications

1. Accouplement de sécurité pour prise de force pour transmettre le mouvement de la prise de force à l'axe entraînée d'une machine caractérisé par:
- un élément solidaire (F,H) de l'axe de sortie (M) de l'accouplement de sécurité,
- un élément intermédiaire (E) agencé de manière à s'engager sur l'élément précédent (F,H) et à assurer le verrouillage et déverrouillage de la prise de force d'une part et l'élément solidaire (F,H) de l'axe de sortie (M) d'autre part de façon à transmettre ou à interrompre le mouvement de la prise de force à l'axe de sortie (M),
- un organe de commande (A,B) de désaccouplement agencé pour bloquer l'élément intermédiaire (E) pour déverrouiller le montage et interrompre l'entraînement.

2. Accouplement de sécurité selon la revendication 1 caractérisé en ce que l'élément solidaire (F,H) de l'axe de sortie (M) est de forme conique composé de deux pièces (F et H) et pourvu d'ergots (G) se bloquant dans la gorge (C) de la prise de force dans le cas de marche normale et est pourvu de ronds (I).

3. Accouplement de sécurité selon la revendication 1 caractérisé en ce que l'élément intermédiaire (E) de forme conique est pourvu d'un arrêt (D) et de glissières (J) destinées à recevoir les ronds (I) portés par l'élément solidaire (F,H) de l'axe de sortie (M).

4. Accouplement de sécurité selon la revendication 1 caractérisé en ce que l'organe de commande de désaccouplement comporte un palpeur qui commande à distance un balancier (A) de l'organe de commande lequel bloque l'arrêt (D) et fait arrêter l'élément intermédiaire conique (E) et par la suite dévisser les ronds (I) des glissières (J) en séparant les éléments coniques en trois pièces qui ne sont plus entraînées par la prise de force.

5. Accouplement de sécurité selon la revendication 4 caractérisé en ce qu'il est supporté par une bague (B) de l'organe de commande coulissant sur la prise de force.

6. Accouplement de sécurité selon les revendications 1 à 5 caractérisé par une première broche (L) solidaire avec l'élément intermédiaire conique (E) et une deuxième broche (K) solidaire avec une des pièces (F, H) de l'autre élément conique (F, H) et d'un ressort placé entre ces deux broches (L, K) afin que les pièces se vissent à fond au moment de montage et que les ronds (I) restent dans les glissières (J) pendant la marche normale; le ressort permettant le dévissement des éléments coniques (E, F, H) pendant la phase d'actionnement du balancier (A).

7. Accouplement de sécurité selon les revendications 1 à 5 caractérisé par un palpeur constitué par un moyen permettant d'actionner à distance le balancier (A).

8. Accouplement de sécurité selon les revendications 1 à 5 caractérisé par un palpeur constitué par un détecteur de proximité.

9. Accouplement de sécurité selon les revendications 1 à 5 et 7 à 8 caractérisé par un palpeur dont le rayon d'action peut aller de l'arrière de la machine motrice jusqu'au bout de la machine entraînée.

10. Accouplement de sécurité selon les revendications 1 à 5 caractérisé par un axe de sortie (M) soit en forme de bout d'arbre cannelé comme la prise de force (C), soit en forme de cardan (croisillon).

## Claims

1. Safety coupling for power take-off for transmitting the movement from the power take-off to the driven shaft of a machine, characterized by:
- an element (F, H) integral with the output shaft (M) of the safety coupling,
- an intermediate element (E) arranged so that it engages with the previous element (F, H) and locks and unlocks the power take-off on the one hand and the element (F, H) integral with the output shaft (M) on the other hand, so as to transmit or to interrupt the movement from the power take-off to the output shaft (M),
- an uncoupling control member (A, B) arranged for blocking the intermediate element (E) in order to unlock the fixture and interrupt the drive.

2. Safety coupling according to Claim 1, characterized in that the element (F, H) integral with the output shaft (M) is of tapered shape composed of two components (F and H) and provided with studs (G) which are blocked in the groove (C) of the power take-off in the case of normal running and is provided with round bars (I).

3. Safety coupling according to Claim 1, characterized in that the intermediate element (E) of tapered shape is provided with a stop (D) and with slideways (J) intended to accommodate the round bars (I) borne by the element (F, H) integral with the output shaft (M).

4. Safety coupling according to Claim 1, characterized in that the uncoupling control member includes a feeler which remotely controls a pivoting lever (A) of the control member which blocks the stop (D) and causes the tapered intermediate element (E) to stop and thereafter unscrew the round bars (I) out of the slideways (J), separating the tapered elements into three components which are no longer driven by the power take-off.

5. Safety coupling according to Claim 4, characterized in that it is supported by a ring (B) of the control member sliding along the power take-off.

6. Safety coupling according to Claims 1 to 5, characterized by a first pin (L) integral with the tapered intermediate element (E) and a second pin (K) integral with one of the components (F, H) of the other tapered element (F, H) and by a spring placed between these two pins (L, K) so that the components can be screwed fully together at the time of assembly and so that the round bars (I) remain in the slideways (J) during normal running; the spring allows the tapered elements (E, F, H) to be unscrewed during the phase in which the pivoting lever (A) is actuated.

7. Safety coupling according to Claims 1 to 5, characterized by a feeler consisting of a means allowing the pivoting lever (A) to be actuated remotely.

8. Safety coupling according to Claims 1 to 5, characterized by a feeler consisting of a proximity detector.

9. Safety coupling according to Claims 1 to 5 and 7 to 8, characterized by a feeler whose radius of action may range from the rear of the driving machine as far as the end of the driven machine.

10. Safety coupling according to Claims 1 to 5, characterized by an output shaft (M) either in the form of a length of shaft, which is splined like the power take-off (C), or in the form of a cardan (journal cross).

## Patentansprüche

1. Sicherheitskupplung für eine Zapfwelle zur Übertragung der Bewegung der Zapfwelle auf die von einer Maschine angetriebene Achse, gekennzeichnet durch:
- ein Element (F, H), das mit der Ausgangsachse (M) der Sicherheitskupplung fest verbunden ist,
- ein Zwischenelement (E), das so angeordnet ist, daß es an dem vorhergehenden Element (F, H) angreift und die Ver- und Entriegelung der Zapfwelle einerseits und des mit der Ausgangsachse (M) fest verbundenen Elements (F, H) andererseits gewährleistet, so daß die Bewegung der Zapfwelle auf die Ausgangsachse (M) übertragen oder unterbrochen wird,
- ein Steuerorgan (A, B) für die Entkupplung, das so angeordnet ist, daß es das Zwischenelement (E) sperren kann, um den Aufbau zu entriegeln und den Antrieb zu unterbrechen.

2. Sicherheitskupplung nach Anspruch 1, dadurch gekennzeichnet, daß das mit der Ausgangsachse (M) fest verbundene Element (F, H) konisch ausgebildet ist, aus zwei Teilen (F und H) besteht und mit Nocken (G) versehen ist, die bei Normalbetrieb in dem Hals (C) der Zapfwelle festgehalten werden, und mit Ringen (I) versehen ist.

3. Sicherheitskupplung nach Anspruch 1, dadurch gekennzeichnet, daß das konisch ausgebildete Zwischenelement (E) mit einem Anschlag (D) und Gleitführungen (J) versehen ist, die zur Aufnahme der von dem fest mit der Ausgangsachse (M) verbundenen Element (F, H) getragenen Ringe (I) bestimmt sind.

4. Sicherheitskupplung nach Anspruch 1, dadurch gekennzeichnet, daß das Steuerorgan für die Entkupplung einen Fühler enthält, der einen Schwinghebel (A) des Steuerorgans fernsteuert, der den Anschlag (D) sperrt und das konische Zwischenelement (E) anhält und folglich die Ringe (I) der Gleitführungen (J) löst, indem er die konischen Elemente in drei Teile trennt, die nicht mehr von der Zapfwelle angetrieben werden.

5. Sicherheitskupplung nach Anspruch 4, dadurch gekennzeichnet, daß sie von einer Buchse (B) des Steuerorgans gestützt wird, die auf der Zapfwelle gleitet.

6. Sicherheitskupplung nach Ansprüchen 1 bis 5, gekennzeichnet durch einen ersten Stift (L), der mit dem konischen Zwischenelement (E) fest verbunden ist, und einen zweiten Stift (K), der mit einem der Teile (F, H) des anderen konischen Elements (F, H) fest verbunden ist, und durch eine Feder, die zwischen diesen beiden Stifen (L, K) angeordnet ist, damit sich die Teile beim Zusammenbau tief einschrauben und die Ringe (I) während des Normalbetriebs in den Gleitführungen (J) bleiben; wobei die Feder während der Betätigungsphase des Schwinghebels (A) das Lösen der konischen Elemente (E, F, H) gestattet.

7. Sicherheitskupplung nach den Ansprüchen 1 bis 5, gekennzeichnet durch einen Fühler, der aus einem Mittel, das die Fernbetätigung des Schwinghebels (A) gestattet, besteht.

8. Sicherheitskupplung nach den Ansprüchen 1 bis 5, gekennzeichnet durch einen Fühler, der aus einem Annäherungsdetektor besteht.

9. Sicherheitskupplung nach den Ansprüchen 1 bis 5 und 7 bis 8, gekennzeichnet durch einen Fühler, dessen Reichweite vom hinteren Teil der Antriebsmaschine bis zum Ende der angetriebenen Maschine gehen kann.

10. Sicherheitskupplung nach den Ansprüchen 1 bis 5, gekennzeichnet durch eine Ausgangsachse (M), die entweder in Form eines Wellenzapfens, der wie die Zapfwelle (C) gerillt ist, oder in Form eines Kardangelenks (Kreuzstück) ausgebildet ist.
